# EUROPEAN PATENT APPLICATION

(11) **EP 1 580 944 A1**
(43) Date of publication of application: **28.09.2005**
(21) Application number: 04006801.7
(22) Date of filing: 22.03.2004
(51) Int. Cl.: H04L 12/58, G06F 17/60

(54) **Message routing to convey message from requestor to provider considering activity history**

(71) Applicant: SAP AG, 69190 Walldorf (DE)
(72) Inventor: Beg, Ajmal, Besley North, NSW 2207 (AU)
(74) Representative: Zahn, Matthias

(57) **Abstract**

A message routing system (200) conveys a message (M) from a requestor (1) to a provider (2). The message triggers a service that the provider (2) provides to the requestor (1). The system (200) uses identification of an individual user (requestor 1 or provider 2) and determines (210) an activity area (A) according to the activity history (215) of that the individual user (1/2) and determines whether the individual user (1/2) is the requestor (1) or the provider (2). In case of requestor (1), the system (200) receives the message (M) and attaches an indication of the activity area (A) to the message (MA). In case of provider (2), the system identifies messages (MA) that have been received from requestors (1) in the activity area (A) of the provider (2) and forwards (260) the identified messages (MA) to the provider (2).

## Description

### Technical field

The present invention generally relates to data processing and, more particularly, relates to computer systems, computer programs, and methods that are used in message routing.

### Background art

Organizations like profit-oriented companies or government agencies are in constant contact with partners like other organizations, individual customers or citizens.

Traditionally, the organizations have been using service centres in that representatives respond to questions. The service centres have contact details that are related to the location of the organization, for example, with mail address, phone number and operating hours. For example, a software company has a service centre that responds to customer questions through email or phone.

Under today's global market conditions, more and more organizations switch to service centres that are available in all continents for 24 hours. The backbones of such service centres are globally distributed computer systems that route messages across the globe. Although such systems are technically de-centralized, they appear to the partners as virtual service centres. The systems are known by variety of terms, like Ticketing System or Workflow System.

In an exemplary scenario, a software company makes its service computer system accessible to its customers through an Internet enterprise portal. The customers deposit their questions to the system in form of messages. The messages also carry customer identification like ID number, further contact details (e.g., name and phone number) along with a question area that is selected from areas that are presented by the system.

### Disclosure of the Invention

### Technical problem

However, there are several problems and constraints, among them:

Messages that arrive consecutively go to different respondents within the company and the respondents might give answers that are inconsistent.

Potential respondents are available during different time frames and at different geographical locations. Exchanging the contact details between both the customer and the representative does not address the answer to the questions but rather leads to confusion.

There is an ongoing need to alleviate these and other problems.

### Technical solution

A solution is provided by method, system and program according to the independent claims. Advantageous features are given in the dependent claims.

### Brief Description of Drawings

FIG. 1 is a simplified diagram with a requestor user and a provider user that both exchange message and service;

FIG. 2 is a simplified flow-chart of a method to operate a message routing system according to the present invention;

FIG. 3 is a simplified flow-chart for step forwarding in the method of FIG. 2;

FIG. 4 is a simplified landscape diagram of the message routing system;

FIG. 5 is a simplified time-progress diagram of the requestor user, the system and the provider user in reference to log-on times of the users;

FIG. 6 is a symbolic presentation of the requestor user and two potential provider users that work in geographic regions and time zones that are west and east to the requestor user;

FIG. 7 is a simplified view to log-on screens for requestor and provider users; and

FIG. 8 is a simplified block diagram of exemplary computer system.

### Best mode for carrying out the invention

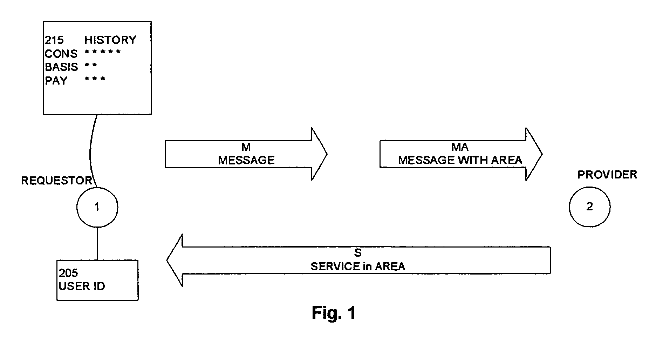

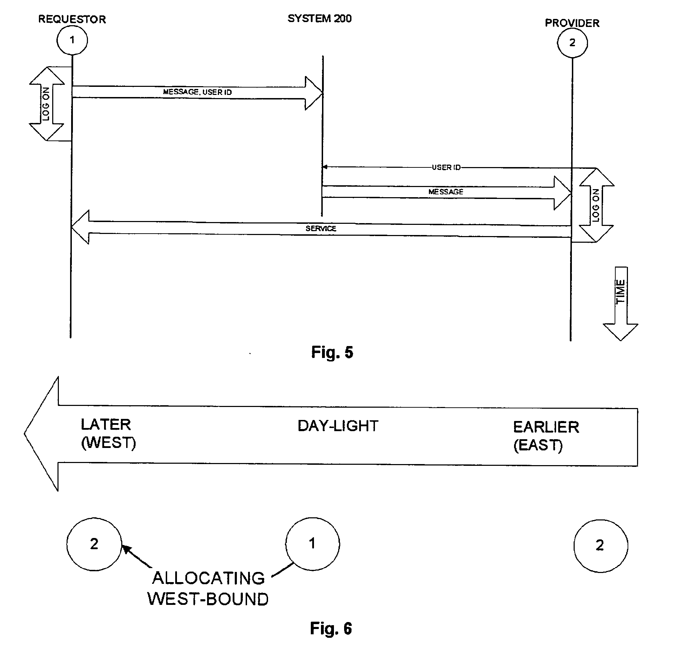

The explanation a) introduces terms, b) gives an overview to the invention (FIGS. 1-4), c) explains the overview (FIGS. 1-4), d) details a time aspect (FIGS. 5-7), e) discusses further implementations, and f) closes by referring to an exemplary computer system. A list of reference symbols is given prior to the claims.

### a) terms

In the context of the present invention, a "user" is not necessarily limited to a human entity, as it might well be another piece of equipment or a software agent.

"Areas" are descriptors for the activity fields of the user and indicate, for example, the expertise in a special technology, his or her professional qualification, work focus or the like. Area can be user roles that are assigned to individual users. In case the organization is a software manufacturing company, exemplary areas are Customer Project Managing, Basis Software Service, Consultation for Application Finance, and the like.

"Messages" refer to all forms of standard communication in computer systems. To name only a few types, a message can be, for example, an email communication, a phone call (with or without voice recognition), a short message service (SMS), or a user-computer interaction through an Internet portal.

"Service" refers to all forms of action that are performed by one user (called provider) with influence on another user (called requestor). Exemplary services in the field of computers are: solving a computer problem, consulting, and answering questions.

"Log-on" and "log-off" indicate the start of and end points when users access the system. Log-on and log-off can be substantially at the same time, for example, when a user submits an email to the system.

### b) overview

FIG. 1 is a simplified diagram with a requestor user and a provider user that both exchange message and service.

The requestor user 1 and the provider user 2 are illustrated by circles on the left and right sides, respectively.

The arrows to the right indicate that the requestor user 1 sends a message M to the provider user 2. It is within the inventive approach that the message M is enhanced by an indication of an area A (message MA). The history 215 is illustrated by an exemplary histogram and indicates that the requestor user 1 has sent 5 messages in the area Consulting (CONS), 2 messages in the area Basis Technology, and 3 messages in the area Payroll (PAY). The requestor user 1 has a particular user identification (reference 205, e.g. number 99999 within the organization).

The arrow to the left indicates that the provider user 2 responds with a service S in the area of the message (e.g., CONS) by answering to the questions in the message.

As it will be explained further below, a distinction into 1 and 2 is sometimes not required so that 1 and 2 are referred to as individual user 1/2.

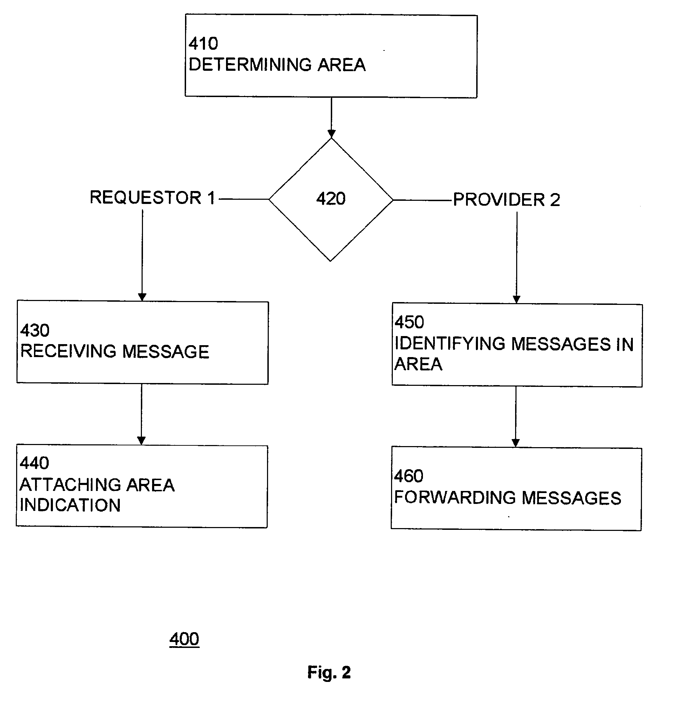

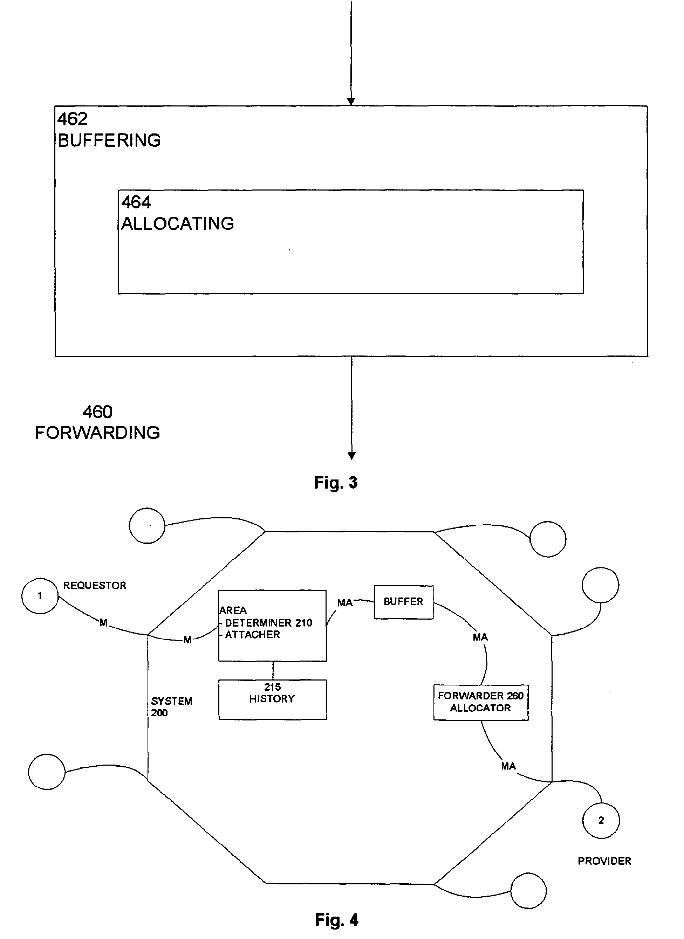

FIG. 2 is a simplified flow-chart of a method 400 to operate the message routing system according to the present invention. The message routing system (cf. 200 in FIG. 4) conveys the message M from the requestor user 1 to the provider user 2 (cf. FIG. 1). As mentioned, the message M triggers the service S that the provider user 2 provides to the requestor user 1. The step order of the figures is exemplary, and can be modified without departing from the scope of the invention.

The steps determining 410 and 420 use the identification 205 (cf. FIG. 1) that is received from the individual user 1/2. In the step determining 410, the system determines the activity area A according to the activity history 215 (cf. FIG. 1) of that user 1/2. In the step determining 420, the system determines whether the individual user 1/2 is the requestor user 1 or the provider user 2.

In case that the individual user 1/2 is the requestor user 1, the system goes to step receiving 430 and receives the message M and continues with step attaching 440 and attaches an indication of the activity area A to the message (hereinafter MA).

In case that the individual user 1/2 is the provider user 2, the system goes to step identifying 450 and identifies the messages MA that have been received from requestor users 1 and that are in the activity area A of the provider user 2. in other words, there is a matching of the provider profile to the messages. Having found the suitable provider user 2, in step forwarding 460 the system sends the identified messages MA to the provider user 2.

Determining the activity area according to history can be implemented with a variety of rules, for example, identifying the area that has been selected recently, identifying the area that has been selected most frequently, or identifying the area that has been stored in a cache.

FIG. 3 is a simplified flow-chart for the step forwarding in the method 400 of FIG. 2. In a system that operates globally, forwarding is optimised by considering the time in that provider users 2 are available to provide the services.

It is therefore advantageous to forward (step 460) the identified messages MA to the provider user 2 with buffering 462 the messages MA until the provider user 2 logs on.

Further, buffering 462 the identified messages MA conveniently uses allocating 464 the messages to the provider user 2 based on expected log-on events of the provider user 2. Further buffering implementations consider, for example, time zones, least-cost routing or geographical vicinity are explained in connection with FIGS. 5-7.

FIG. 4 is a simplified landscape diagram of a message routing system that operates according to the present invention.

The octagon in the centre symbolizes the message routing system 200; and the circles around it symbolize various users that are logged on, among them the requestor user 1 and the provider user 2. The message M goes from the requestor 1 to the system 200 and inside the system to an area determiner 210. The determiner 210 cooperates with the history 215 (cf. FIG. 1). The area attacher (cf. step 410) converts the message M to the message MA (i.e. with area indication). Optionally, the buffer stores MA until a forwarder 260 forwards the message to the provider user 2 (cf. step 460). The figures also illustrates that an allocator is part of the forwarder 260.

The system 200 is implemented on one or more computers that execute a computer program. Persons of skill in the art can implement method, system and program by standard techniques, such as database tables, extended mark-up language (XML), etc.

For example, look-up tables can give attributes to distinguish requestor and provider users to each user ID 205.

### c) overview explanation

For the individual user 1/2 there is no need to indicate the quality of being either the provider or the requestor.

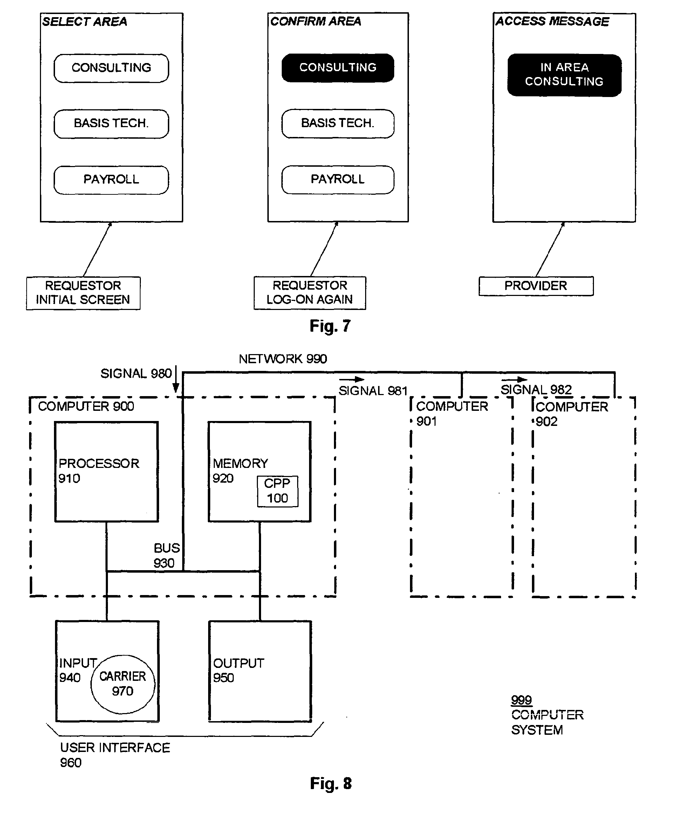

The system-user interactions are simplified for both the requestor user 1 and the provider user 2. For example, the requestor user 1 has manually selected the area A of "Consultation" upon using the system 200 for the first time. The next time, the system 200 repeats this area "Consultation" and proposes to use this area again ("...do you like to deposit your message to Consultation...", cf. FIG. 7). This relieves the requestor user from selecting the area again. For the provider user 2 the activity area A (like "Consultation") can be pre-set.

Attaching the area (e.g., "Consultation") to the message M, MA helps to effectively channel the request message to the responding service provider that has the most fitting profile (i.e., provider user 2 that has already experience in responding in that area).

### d) time aspect

FIG. 5 is a simplified time-progress diagram of the requestor user (left), the system (centre) and the provider user (right) in reference to log-on times of the users.

The progress of time is indicated by the top-down direction. While being logged on, the requestor user 1 can forward the message M to system 200, conveniently together with the user ID. The system 200 performs the method with receiving the user ID from the provider user 2 (upon log-on) and forwarding the message. The provider user 2 provides the service to the requestor independently from the log-in status of the requestor. In the figure, the provider user 2 is still logged-on and the requestor user 1 is logged-off.

FIG. 6 is a symbolic presentation of the requestor user 1 and two potential provider users 2 that work in geographic regions and time zones that are west and east to the requestor user.

As mentioned in connection with FIG. 3, allocating 464 the messages to the provider user 2 can be based on the expected log-on time of the provider user 2. Users do log on periodically, for example, every morning from Monday to Friday. Since the routing system of the invention operates globally, evaluating time zones is advantageous.

This approach is especially convenient if the requestor user 1 and the provider user 2 work in different time zones. The time zone indicates the expected log-on time for the provider user 2. Conveniently, allocating follows the daylight hours. As in the figures, requestor user 1 submits the message at day-light, and the system allocates the message (that has the urgency attribute) to the provider user 2 in a time zone in that the daylight (and the "normal working hours") come later. Non-urgent messages can be forwarded to provider users in the East (cf. right side of the figure).

On a different example, messages M from requestor users 1 in Australia are forwarded west-bound to provider users 2 in Europe; messages M from requestor users 1 in Europe are forwarded west-bound to provider users 2 in the Americas.

More generally, the examples show allocating the message to a provider user 2 in a time zone that lags behind or that is equal to the time zone of the requestor user 1.

The information about the user's location (e.g., Sydney) or and the time zone (i.e. hours plus or minus to Greenwich Mean Time) can conveniently be stored in database tables that are related to the user ID.

FIG. 7 is a simplified view to log-on screens into the system 200 for requestor and provider users. The screens are very much simplified. The italic texts at the top stand for instructions to the users; the rounded rectangles symbolized buttons that are representative user interface elements.

The screen on the left side is an initial log-on screen for the requestor user 1 who is invited to select an area from Consulting, Basis Technology and Payroll.

Assuming that the requestor user 1 has submitted messages to the system several times so that entries have been generated in the history 215 (cf. FIG. 1). Consulting is the most frequently used area.

The screen in the middle is the log-on screen for the requestor. The area Consulting is indicated because it is selected in the activity history.

The screen on the right side is the log-on screen for the provider user 2 and indicates that a message in the area "Consulting" is waiting to be processed.

### e) further implementations

The present invention can be implemented as an add-on to existing computer systems.

Allocating 464 the messages to the provider user 2 based on standards costs (that are associated with the provider user 2 and the service area A) is convenient in systems that are optimised towards costs (e.g., least cost routing).

Allocating 464 the messages to the provider user 2 can be based on the physical distance between the requestor user 1 and the provider user 2. This is convenient when the provider user 2 has to visit the requestor user 1 (e.g., in a system that supports an equipment repair service).

Although the allocation schemes have been explained separately, persons of skill in the art can combine them, for example, allocating according the two criteria least cost and time zone. Further allocation criteria can be introduced as well, for example, (i) urgency attributes in the message or (ii) message escalating in case the originally allocated provider does not respond.

### f) exemplary computer system

The description closes by referring to an exemplary computer system and thereby explains how the method 400 and the system 200 can be implemented by a computer that is programmed by a computer program.

FIG. 8 is a simplified block diagram of exemplary computer system 999 having a plurality of computers 900, 901, 902 (or even more).

Computer 900 can communicate with computers 901 and 902 over network 990. Computer 900 has processor 910, memory 920, bus 930, and, optionally, input device 940 and output device 950 (I/O devices, user interface 960). As illustrated, the invention is implemented by computer program product 100 (CPP), carrier 970 and signal 980.

In respect to computer 900, computer 901/902 is sometimes referred to as "remote computer", computer 901/902 is, for example, a server, a peer device or other common network node, and typically has many or all of the elements described relative to computer 900.

Computer 900 is, for example, a conventional personal computer (PC), a desktop device or a hand-held device, a multiprocessor computer, a pen computer, a microprocessor-based or programmable consumer electronics device, a minicomputer, a mainframe computer, a personal mobile computing device, a mobile phone, a portable or stationary personal computer, a palmtop computer or the like.

Processor 910 is, for example, a central processing unit (CPU), a microcontroller unit (MCU), digital signal processor (DSP), or the like.

Memory 920 has elements that temporarily or permanently store data and instructions. Although memory 920 is illustrated as part of computer 900, memory can also be implemented in network 990, in computers 901/902 and in processor 910 itself (e.g., cache, register), or elsewhere. Memory 920 can be a read only memory (ROM), a random access memory (RAM), or a memory with other access options. Memory 920 is physically implemented by computer-readable media, for example: (a) magnetic media, like a hard disk, a floppy disk, or other magnetic disk, a tape, a cassette tape; (b) optical media, like optical disk (CD-ROM, digital versatile disk - DVD); (c) semiconductor media, like DRAM, SRAM, EPROM, EEPROM, memory stick.

Optionally, memory 920 is distributed. Portions of memory 920 can be removable or non-removable. For reading from media and for writing in media, computer 900 uses well-known devices, for example, disk drives, or tape drives.

Memory 920 stores modules such as, for example, a basic input output system (BIOS), an operating system (OS), a program library, a compiler, an interpreter, and a text- processing tool. Modules are commercially available and can be installed on computer 900. For simplicity, these modules are not illustrated.

CPP 100 has program instructions and - optionally - data that cause processor 910 to execute method steps of the present invention. In other words, CPP 100 can control the operation of computer 900 and its interaction in network system 999 so that is operates to perform in accordance with the invention. For example and without the intention to be limiting, CPP 100 can be available as source code in any programming language, and as object code ("binary code") in a compiled form.

Although CPP 100 is illustrated as being stored in memory 920, CPP 100 can be located elsewhere. CPP 100 can also be embodied in carrier 970.

Carrier 970 is illustrated outside computer 900. For communicating CPP 100 to computer 900, carrier 970 is conveniently inserted into input device 940. Carrier 970 is implemented as any computer readable medium, such as a medium largely explained above (cf. memory 920). Generally, carrier 970 is an article of manufacture having a computer readable medium with computer readable program code to cause the computer to perform methods of the present invention. Further, signal 980 can also embody computer program product 100.

Having described CPP 100, carrier 970, and signal 980 in connection with computer 900 is convenient. Optionally, further carriers and further signals embody computer program products (CPP) to be executed by further processors in computers 901 and 902.

Input device 940 provides data and instructions for processing by computer 900. Device 940 can be a keyboard, a pointing device (e.g., mouse, trackball, cursor direction keys), microphone, joystick, game pad, scanner, or disc drive. Although the examples are devices with human interaction, device 940 can also be a device without human interaction, for example, a wireless receiver (e.g., with satellite dish or terrestrial antenna), a sensor (e.g., a thermometer), a counter (e.g., a goods counter in a factory). Input device 940 can serve to read carrier 970.

Output device 950 presents instructions and data that have been processed. For example, this can be a monitor or a display, (cathode ray tube (CRT), flat panel display, liquid crystal display (LCD), speaker, printer, plotter, vibration alert device. Output device 950 can communicate with the user, but it can also communicate with further computers.

Input device 940 and output device 950 can be combined to a single device. Any device 940 and 950 can be provided optional.

Bus 930 and network 990 provide logical and physical connections by conveying instruction and data signals. While connections inside computer 900 are conveniently referred to as "bus 930", connections between computers 900_902 are referred to as "network 990". Optionally, network 990 includes gateways which are computers that specialize in data transmission and protocol conversion.

Devices 940 and 950 are coupled to computer 900 by bus 930 (as illustrated) or by network 990 (optional). While the signals inside computer 900 are mostly electrical signals, the signals in network are electrical, electromagnetic, optical or wireless (radio) signals.

Networks are commonplace in offices, enterprise-wide computer networks, intranets and the Internet (e.g., world wide web). Network 990 can be a wired or a wireless network. To name a few network implementations, network 990 can be, for example, a local area network (LAN), a wide area network (WAN), a public switched telephone network (PSTN); a Integrated Services Digital Network (ISDN), an infra-red (IR) link, a radio link, like Universal Mobile Telecommunications System (UMTS), Global System for Mobile Communication (GSM), Code Division Multiple Access (CDMA), or satellite link.

A variety of transmission protocols, data formats and conventions is known, for example, as transmission control protocol/internet protocol (TCP/IP), hypertext transfer protocol (HTTP), secure HTTP, wireless application protocol (WAP), unique resource locator (URL), a unique resource identifier (URI), hypertext markup language (HTML), extensible markup language (XML), extensible hypertext markup language (XHTML), wireless markup language (WML), standard generalized markup language (SGML).

Interfaces coupled between the elements are also well known in the art. For simplicity, interfaces are not illustrated. An interface can be, for example, a serial port interface, a parallel port interface, a game port, a universal serial bus (USB) interface, an internal or external modem, a video adapter, or a sound card.

### References

1 requestor user

2 provider user

1/2 individual user

100 computer program

200 message routing system

205 identification of individual user

210 area determiner

215 activity history

260 forwarder

400 method

4xx method steps

9xx computer and its components

A activity area

M message

MA message with area

S service

## Claims

1. Method (400) to operate a message routing system (200), that conveys a message (M) from a requestor user (1) to a provider user (2) wherein the message (M) triggers a service (S) that the provider user (2) provides to the requestor user (1), the method (400) with the steps of: using receiving identification (205) of an individual user (1/2), determining (410) an activity area (A) according to the activity history (215) of that user (1/2) and determining (420) whether the individual user (1/2) is the requestor user (1) or the provider user (2); in case that the individual user (1/2) is the requestor user (1), receiving (430) the message (M) and attaching (440) an indication of the activity area (A) to the message (MA); and in case that the individual user (1/2) is the provider user (2), identifying (450) messages (MA) that have been received from requestor users (1) and that are in the activity area (A) of the provider user (2) and forwarding (460) the identified messages (MA) to the provider user (2).

2. The method of claim 1, wherein forwarding (460) the identified messages (MA) to the provider user (2) comprises buffering (4b2) the messages (MA) until the provider user (2) logs on.

3. The method of claim 2, wherein buffering (462) the identified messages (MA) comprises allocating (464) the messages to the provider user (2) based on expected log-on events of the provider user (2).

4. The method of claim 3, wherein allocating (464) the messages to the provider user (2) comprises to evaluate time zones.

5. The method of claim 4, wherein allocating (464) with evaluating time zones comprises to allocate the message to a provider user (2) that is in a time zone that lags behind or that is equal to the time zone of the requestor user (1).

6. The method of claim 2, wherein buffering (460) the identified messages (MA) comprises allocating (464) the messages to the provider user (2) based on standards costs that are associated with provider user (2) and service area.

7. The method of claim 2, wherein buffering (462) the identified messages (MA) comprises allocating (464) the messages to the provider user (2) based on the physical distance between requestor user (1) and provider user (2).

8. A system adapted to perform the method of any of claims 1-7.

9. A computer program comprising program instructions for causing a computer to perform the methods of any of claims 1-7.

10. A computer-readable medium comprising instructions executable on a computer system for performing the methods of any of claims 1-7.
